# EUROPÄISCHE PATENTANMELDUNG

(11) **EP 4 527 491 A1**
(43) Veröffentlichungstag der Anmeldung: **26.03.2025**
(21) Anmeldenummer: 23199491.4
(22) Anmeldetag: 25.09.2023
(51) Int. Cl.: B01D 53/83, B01D 46/00, B01D 46/32, B01D 46/58, B01D 46/62, B01D 46/66, B01D 53/10, B01D 39/08

(54) **VORRICHTUNG UND VERFAHREN ZUR BEHANDLUNG VON ABGAS EINES HAUPTPROZESSES**

(71) Anmelder: Primetals Technologies Austria GmbH, 4031 Linz (AT)
(72) Erfinder: Plattner, Tobias, 3874 Litschau (AT)
(74) Vertreter: Metals@Linz

(57) **Zusammenfassung**

Die Erfindung betrifft eine Vorrichtung (1) zur Behandlung von Abgas (2) eines Hauptprozesses (3) umfassend eine Filtereinheit (4) mit einer ersten und zweiten Filterstufe (5, 6) und eine Gaszuleitung (11) für die Zuführung des Abgases (2) vom Hauptprozess (3) zur Filtereinheit (4). Die erste Filterstufe (5) umfasst einen ersten Filter (7) und einen zweiten Filter (8), die zweite Filterstufe (6) umfasst einen dritten Filter (9). Der dritte Filter (9) ist in der Filtereinheit (4) zwischen dem ersten Filter (7) und dem zweiten Filter (8) angeordnet. Die Gaszuleitung (11) weist eine Einrichtung (12) zum Aufteilen des anströmenden Abgases (2) auf eine erste und eine zweite Gaszuleitung (13, 14) auf. Ein Gasweiterleitungssystem (18) dient der Weiterleitung der Teilgasströme (16, 17) nach dem Durchströmen des ersten und zweiten Filters (7, 8) zum dritten Filter (9). Das Gasweiterleitungssystem (18) weist eine Hauptadditiv-Zuführeinrichtung (21) für die Zuführung eines Hauptadditivs (22) zum Abgas auf. Zum Austragen von Filterprodukten (24, 26, 28), die von den Filtern (7, 8, 9) abgeschiedenen werden, sind Austragungseinrichtungen (23, 25, 27) vorgesehen.

Ferner betrifft die Erfindung ein Verfahren zur Behandlung von Abgas eines Hauptprozesses mit der erfindungsgemäßen Vorrichtung.

## Beschreibung

Die Erfindung betrifft eine Vorrichtung zur Behandlung von Abgas eines Hauptprozesses umfassend eine Filtereinheit zur Reinigung des Abgases und eine Gaszuleitung für die Zuführung des Abgases vom Hauptprozess zur Filtereinheit. Die Erfindung betrifft ferner ein Verfahren zur Behandlung von Abgasen eines Hauptprozesses mit dieser Vorrichtung.

Bei dem Hauptprozess kann es sich beispielsweise um einen Primärprozess in einer Sinteranlage, Pelletieranlage, Kokereianlage, Kraftwerksanlage oder vergleichbaren Anlage handeln. Bei diesem Hauptprozess entstehen Prozessgase, nachfolgend Abgas genannt, die durch geeignete Behandlung vor der Ausleitung an die Umwelt gereinigt werden müssen.

Bei der Abgasreinigung ist es bekannt, Adsorptions- und Absorptionsmittel als Additive in das Abgas zu geben und mittels der Adsorptionsmittel und Absorptionsmitteln Bestandteile des Abgases zu binden und diese anschließend zu entfernen. Für die Entfernung werden Gewebefilter eingesetzt.

Aus WO 2006/099948 A1 sind Verfahren und Vorrichtungen zur Behandlung von Abgas aus Sinteranlagen bekannt, die Gewebefilter zur Reinigung des Abgases umfassen.

Bei bekannten Vorrichtungen und Verfahren zur Abgasreinigung wird einstufig gefiltert. Es fällt somit durch die Zugabe von Adsorptionsmitteln und Absorptionsmitteln in Kombination mit Stäuben aus dem Hauptprozess in den Gewebefiltern ein aus dem Abgas entferntes Filterprodukt an, in dem Stäube, Adsorptionsprodukte und Absorptionsprodukte miteinander vermischt sind. In den meisten Fällen ist wegen des Schadstoffgehalts dieses gemischten Filterprodukts nur eine Deponierung des Filterprodukts möglich. In einigen Anwendungsfällen ist eine teilweise Verwertung des Produkts möglich, erfordert aber je nach eingesetzten Additiven eine aufwendige Aufbereitung des gemischten Filterprodukts, beispielsweise durch das sogenannte Leaching. Ein derartiges Aufbereitungsverfahren ist beispielsweise aus WO 2022/048965 A1 bekannt. Auf diese Weise lassen sich wertvolle Bestandteile aus dem gemischten Filterprodukt extrahieren, welche dann dem Hauptprozess oder anderen Prozessen zugeführt werden können.

Nachteilig bei den bekannten Vorrichtungen und Verfahren ist somit, dass die Zugabe von unterschiedlich wirkenden Additiven vor der einstufigen Filtereinheit erfolgt und somit verschiedene hierbei entstehende Produkte und im Abgas enthaltene Stäube lediglich gemeinsam als gemischtes Filterprodukt anfallen. Eine Separierung verschiedener Produkte und Stäube nach der Filtration ist nicht oder nur mit zusätzlichen aufwendigen Aufbereitungsverfahren möglich.

Der Erfindung liegt die Aufgabe zugrunde, eine neue Vorrichtung und ein neues Verfahren zur Behandlung von Abgas eines Hauptprozesses anzugeben, insbesondere eine Vorrichtung und ein Verfahren, bei dem unterschiedliche Filterprodukte aus der Filtereinheit ausgetragen werden können, vorzugsweise ohne den Platzbedarf für die Filtereinheit der Vorrichtung im Vergleich zu bekannten Vorrichtungen wesentlich zu erhöhen.

Diese Aufgabe wird hinsichtlich der Vorrichtung durch die Merkmale der Vorrichtung nach Anspruch 1 und hinsichtlich des Verfahrens durch die Merkmale des Verfahrens nach Anspruch 10 gelöst. Ausgestaltungen und Weiterbildungen sind in den jeweiligen abhängigen Ansprüchen angegeben.

Die erfindungsgemäße Vorrichtung zur Behandlung von Abgas eines Hauptprozesses umfasst eine Filtereinheit zur Reinigung des Abgases und eine Gaszuleitung für die Zuführung des Abgases vom Hauptprozess zur Filtereinheit. Die Erfindung sieht vor, dass die Filtereinheit eine erste Filterstufe und eine zweite Filterstufe umfasst. Die erste Filterstufe wiederum umfasst einen ersten Filter und einen zweiten Filter. Die zweite Filterstufe umfasst einen dritten Filter. Der erste Filter und der zweite Filter und der dritte Filter sind je ein Gewebefilter, wobei jeder Gewebefilter ein oder mehrere Filterelemente umfassen kann. Die Gewebefilter dienen der Entstaubung des durchströmenden Abgases. Bei den Gewebefiltern kann es sich beispielsweise um Pulse-Jet-Filter handeln, also um Gewebefilter, bei denen die Gewebe-Filterelemente zur Abreinigung im Gegenstrom mit Druckluft durchströmt werden. Bei der Abreinigung sammeln sich die Filterprodukte in entsprechenden Auffangeinrichtungen und können ausgetragen werden.

Erfindungsgemäß ist vorgesehen, dass der dritte Filter in der Filtereinheit zwischen dem ersten Filter und dem zweiten Filter angeordnet ist. Die Gaszuleitung weist eine Einrichtung zum Aufteilen des anströmenden Abgases auf eine erste Gaszuleitung und eine zweite Gaszuleitung auf, wobei die erste Gaszuleitung zur Zuführung eines ersten Teilgasstroms des Abgases an den ersten Filter und die zweite Gaszuleitung zur Zuführung eines zweiten Teilgasstroms des Abgases an den zweiten Filter ausgebildet ist. Erster und zweiter Filter sind somit hinsichtlich des Abgasstromes parallel zueinander im Abgasstrom angeordnet. Beispielsweise können erster und zweiter Filter zumindest im Wesentlichen baugleich ausgebildet sein. Auch kann vorgesehen sein, dass erster und zweiter Filter in der Filtereinheit symmetrisch zu einer Mittelfläche des zweiten Filters angeordnet und/oder ausgebildet sind.

Die Erfindung sieht weiter vor, dass die Vorrichtung zur Behandlung von Abgas ein Gasweiterleitungssystem zur Weiterleitung des ersten Teilgasstromes nach dem Durchströmen des ersten Filters und des zweiten Teilgasstromes nach dem Durchströmen des zweiten Filters zum dritten Filter aufweist.

Gemäß der Erfindung weist das Gasweiterleitungssystem mindestens eine Hauptadditiv-Zuführeinrichtung für die Zuführung mindestens eines Hauptadditivs zum Abgas auf.

Erfindungsgemäß weist die Vorrichtung zur Behandlung von Abgas eine erste Austragungseinrichtung zum Austragen eines vom ersten Filter abgeschiedenen ersten Filterprodukts und eine zweite Austragungseinrichtung zum Austragen eines vom zweiten Filter abgeschiedenen zweiten Filterprodukts und eine dritte Austragungseinrichtung zum Austragen eines vom dritten Filter abgeschiedenen dritten Filterprodukts aus der Filtereinheit auf.

Die Vorteile der Erfindung liegen insbesondere darin, dass durch die zweistufige Filtration und die Zuführung des Hauptadditivs zwischen den Filterstufen unmittelbar durch die Filtration, ohne weitere Behandlungsschritte, mindestens zwei unterschiedliche Filterprodukte entstehen, nämlich zum einen das erste und das zweite Filterprodukt und zum anderen das dritte Filterprodukt, die gesondert aus der Filtereinheit ausgetragen werden. Die unterschiedlichen Filterprodukte lassen sich unabhängig voneinander einer Verwertung und/oder Entsorgung zuführen.

Grundsätzlich ließe sich dieser Vorteil auch durch zwei hintereinander geschaltete eigenständige Filtereinheiten erreichen. Dies würde allerdings den Platzbedarf der gesamten Filtereinrichtung deutlich erhöhen. Ein weiterer Vorteil der Erfindung liegt darin, dass die Kombination der beiden Filterstufen in einer Filtereinheit eine räumlich kompakte zweistufige Filtration ermöglicht. Der Platzbedarf der erfindungsgemäß vorgesehenen, zweistufigen Filtereinheit unterscheidet sich nicht wesentlich vom Platzbedarf einer aus dem Stand der Technik bekannten einstufigen Filtereinheit mit vergleichbarer Filterleistung. Dies wird ermöglicht durch die Aufteilung der ersten Filterstufe in zwei hinsichtlich der Abgasströmung parallel geschaltete Filter, den ersten Filter und den zweiten Filter, und die zweite Filterstufe mit einem weiteren, dritten Filter, der räumlich in der Filtereinheit zwischen dem ersten und dem zweiten Filter angeordnet ist. Dadurch lassen sich Abgasleitungen und/oder Austragungseinrichtungen für Filterprodukte kompakt und damit platzsparend anordnen.

Ein weiterer Vorteil der Ausbildung in einer Filtereinheit sind die im Vergleich zu zwei hintereinander geschalteten Filtereinheiten geringeren Investitions- und Betriebskosten. Diese unterscheiden sich nicht wesentlich von den Investitions- und Betriebskosten einer bekannten einstufigen Filtereinheit mit vergleichbarer Filterleistung.

Gemäß einer Weiterbildung der Erfindung kann die Gaszuleitung mindestens eine Primäradditiv-Zuführeinrichtung für die Zuführung mindestens eines Primäradditivs zum Abgas aufweisen. Die getrennte Zuführung des Primäradditivs und des Hauptadditivs vor unterschiedlichen Filterstufen unterstützt den bereits vorstehend angesprochenen Vorteil, dass unmittelbar durch die Filtration, ohne weitere Behandlungsschritte, mindestens zwei unterschiedliche Filterprodukte entstehen.

Eine Ausgestaltung der Erfindung sieht vor, dass die Filtereinheit ein gemeinsames Gehäuse für den ersten Filter und den zweiten Filter und den dritten Filter aufweist. Beispielsweise kann das Gehäuse eine quaderartige Form aufweisen mit einer Länge, einer Breite und einer Höhe, wobei die Länge größer als die Breite und die Höhe ist. In diesem Fall kann der dritte Filter im Gehäuse in Längsrichtung zwischen dem ersten und dem zweiten Filter angeordnet sein. Insbesondere befinden sich erster und zweiter Filter an gegenüberliegenden Enden des quaderartigen Gehäuses und der dritte Filter ist mittig im quaderartigen Gehäuse angeordnet.

Eine Ausführungsvariante sieht vor, dass das Gasweiterleitungssystem zwischen erstem und zweitem Filter einerseits und drittem Filter andererseits eine erste Gasweiterleitung zur Weiterleitung des ersten Teilgasstromes nach dem Durchströmen des ersten Filters, eine zweite Gasweiterleitung zur Weiterleitung des zweiten Teilgasstromes nach dem Durchströmen des zweiten Filters, eine Einrichtung zur Zusammenführung des ersten Teilgasstromes und des zweiten Teilgasstromes zu einem Gesamtgasstrom und eine dritte Gasweiterleitung zur Weiterleitung des Gesamtgasstroms zum dritten Filter aufweist. In diesem Fall können mindestens zwei Hauptadditiv-Zuführeinrichtungen für die Zuführung mindestens eines Hauptadditivs zum Abgas vorgesehen sein, wobei eine dieser Hauptadditiv-Zuführeinrichtungen an der ersten Gasweiterleitung und eine weitere dieser Hauptadditiv-Zuführeinrichtungen an der zweiten Gasweiterleitung angeordnet ist. Alternativ oder zusätzlich kann eine der mindestens einen Hauptadditiv-Zuführeinrichtungen für die Zuführung mindestens eines Hauptadditivs zum Abgas an der dritten Gasweiterleitung angeordnet sein.

Auch kann vorgesehen sein, dass die zwischen Hauptprozess und Filtereinheit angeordnete Gaszuleitung eine der mindestens einen Primäradditiv-Zuführeinrichtungen für die Zuführung mindestens eines Primäradditivs in einer dritten Gaszuleitung aufweist, die aus Sicht des Abgasstromes der Einrichtung zum Aufteilen des anströmenden Abgases vorgelagert ist. Alternativ oder additiv können auch mindestens zwei Primäradditiv-Zuführeinrichtungen für die Zuführung mindestens eines Primäradditivs vorgesehen sein, wobei eine dieser Primäradditiv-Zuführeinrichtungen an der ersten Gaszuleitung und eine weitere dieser Primäradditiv-Zuführeinrichtungen an der zweiten Gaszuleitung angeordnet ist.

Die Zuführung des Primäradditivs und/oder des Hauptadditives kann beispielsweise mittels Eindüsen erfolgen.

Bei dem Primäradditiv kann es sich beispielsweise um ein Absorptionsmittel, beispielsweise Aktivkohle oder Herdofenkoks, handeln. Das anfallende erste und zweite Filterprodukt kann dann beispielsweise dem Hauptprozess, aus dem das Abgas anfällt, und/oder einem anderen Hauptprozess und/oder einem weiteren Verwertungsprozess zugeführt werden. In Ausgestaltungen sind hierfür keine weiteren Aufbereitungsschritte erforderlich.

Bei dem Hauptadditiv kann es sich beispielsweise um ein Absorptionsmittel, beispielsweise Ca(OH)2 oder NaHCO3 handeln. Wird Ca(OH)2 als Hauptadditiv eingesetzt, kann das anfallende dritte Filterprodukt ohne weitere Aufbereitungsschritte direkt einer Verwertung, beispielsweise einer Zementproduktion, zugeführt werden. Wird NaHCO3 als Hauptadditiv verwendet, kann das anfallende dritte Filterprodukt einer weiteren Behandlung, beispielsweise dem sogenannten Leaching, zugeführt werden. Bei Verwendung entsprechender zweiter Additive kann das Gasweiterleitungssystem mit der Hauptadditiv-Zuführeinrichtung, gegebenenfalls in Verbindung mit einem untenstehend näher beschriebenen Gaskonditionierer, der Rauchgasentschwefelung dienen.

Eine Weiterbildung der Erfindung sieht vor, dass in dem Gasweiterleitungssystem zwischen erstem Filter und zweitem Filter einerseits und drittem Filter andererseits ein Gaskonditionierer angeordnet ist. Beispielsweise kann der Gaskonditionierer dazu eingerichtet sein, den Abgasstrom zu kühlen. Alternativ oder zusätzlich kann der Gaskonditionierer ein Gaskonditionierreaktor sein und beispielsweise einen Reaktionsraum für zugeführte Additive bereitstellen.

Eine Ausgestaltung sieht vor, dass die erste Austragungseinrichtung und die zweite Austragungseinrichtung dazu ausgebildet sind, das erste Filterprodukt und das zweite Filterprodukt dem Hauptprozess, dem das Abgas entstammt, und/oder einem anderen Hauptprozess und/oder einem weiteren Verwertungsprozess zuzuführen.

Die dritte Austragungseinrichtung kann dazu ausgebildet sein, das dritte Filterprodukt zumindest teilweise einer weiteren Behandlungseinrichtung und/oder zumindest teilweise dem Hauptprozess und/oder zumindest teilweise der Gaszuleitung und/oder zumindest teilweise dem Gasweiterleitungssystem und/oder zumindest teilweise einem weiteren Hauptprozess und/oder zumindest teilweise einem weiteren Verwertungsprozess zuzuführen.

Aus Sicht des strömenden Abgases tritt das gereinigte Abgas nach Durchströmen der zweiten Filterstufe mit dem dritten Filter aus der Filtereinheit aus. Hierzu ist dem dritten Filter eine Reingasleitung zugeordnet, die das gereinigte Abgas nach Durchströmen der ersten und zweiten Filterstufe aufnimmt und einer Gasnachbehandlungs- und/oder Ausblaseinrichtung, beispielsweise einer Rauchgasentstickungsanlage und/oder einem Gebläse und/oder einem Kamin, zuführt.

Das erfindungsgemäße Verfahren zur Behandlung von Abgas eines Hauptprozesses nutzt die vorstehend beschriebene, erfindungsgemäße Vorrichtung. Das Verfahren umfasst folgende Schritte:
a) Das Abgas des Hauptprozesses wird der Filtereinheit mittels der Gaszuleitung zugeführt, wobei das Abgas in der Einrichtung zum Aufteilen des anströmenden Abgases aufgeteilt wird und ein erster Teilgasstrom des Abgases mittels der ersten Gaszuleitung an den ersten Filter und ein zweiter Teilgasstrom des Abgases mittels der zweiten Gaszuleitung an den zweiten Filter zugeführt wird;
b) der erste Teilgasstrom wird nach Durchströmen des ersten Filters und der zweite Teilgasstrom wird nach Durchströmen des zweiten Filters mittels des Gasweiterleitungssystems zum dritten Filter weitergeleitet, hierbei wird dem Abgas mittels der mindestens einen Hauptadditiv-Zuführeinrichtung mindestens ein Hauptadditiv zugeführt;
c) ein vom ersten Filter abgeschiedenes erstes Filterprodukt wird mittels der ersten Austragungseinrichtung und/oder ein vom zweiten Filter abgeschiedenes zweites Filterprodukt wird mittels der zweiten Austragungseinrichtung und/oder ein vom dritten Filter abgeschiedenes drittes Filterprodukt wird mittels der dritten Austragungseinrichtung aus der Filtereinheit ausgetragen.

Die Vorteile dieses Verfahrens und Ausgestaltungen und Weiterbildungen dieses Verfahrens ergeben sich aus den vorstehenden Ausführungen zur erfindungsgemäßen Vorrichtung.

Gemäß einer Weiterbildung des Verfahrens kann in Schritt a) dem Abgas mittels der mindestens einen Primäradditiv-Zuführeinrichtung mindestens ein Primäradditiv zugeführt werden.

Eine Ausgestaltung des Verfahrens sieht vor, dass in Schritt b) der erste Teilgasstrom nach dem Durchströmen des ersten Filters zunächst über die erste Gasweiterleitung und der zweite Teilgasstrom nach dem Durchströmen des zweiten Filters zunächst über die zweite Gasweiterleitung der Einrichtung zur Zusammenführung des ersten Teilgasstromes und des zweiten Teilgasstromes zu einem Gesamtgasstrom zugeführt wird und anschließend der Gesamtgasstrom über die dritte Gasweiterleitung dem dritten Filter zugeführt wird.

Eine Weiterbildung des Verfahrens sieht vor, dass das Abgas zwischen erstem Filter und zweitem Filter einerseits und drittem Filter andererseits konditioniert wird, insbesondere mittels des vorstehend beschriebenen Gaskonditionierers.

Eine Ausgestaltung des Verfahrens sieht vor, dass das erste Filterprodukt und das zweite Filterprodukt dem Hauptprozess und/oder einem anderen Hauptprozess und/oder einem weiteren Verwertungsprozess zugeführt werden. In Ausgestaltungen sind hierfür keine weiteren Aufbereitungsschritte erforderlich.

Alternativ oder zusätzlich kann vorgesehen sein, dass das dritte Filterprodukt zumindest teilweise einer weiteren Behandlungseinrichtung und/oder zumindest teilweise dem Hauptprozess und/oder zumindest teilweise der Gaszuleitung und/oder zumindest teilweise dem Gasweiterleitungssystem und/oder zumindest teilweise einem anderen Hauptprozess und/oder zumindest teilweise einem weiteren Verwertungsprozess zugeführt wird.

Gemäß einer Ausführungsvariante des Verfahrens kann das Primäradditiv ein Adsorptionsmittel und/oder das Hauptadditiv ein Absorptionsmittel umfassen. Beispiele hierzu wurden bereits vorstehend erläutert.

Eine Ausgestaltung der Erfindung sieht vor, dass das Primäradditiv einen Inertstoff, beispielsweise CaCO3, zur Kontrolle des Kohlenstoffgehalts im ersten Filterprodukt und/oder im zweiten Filterprodukt umfasst.

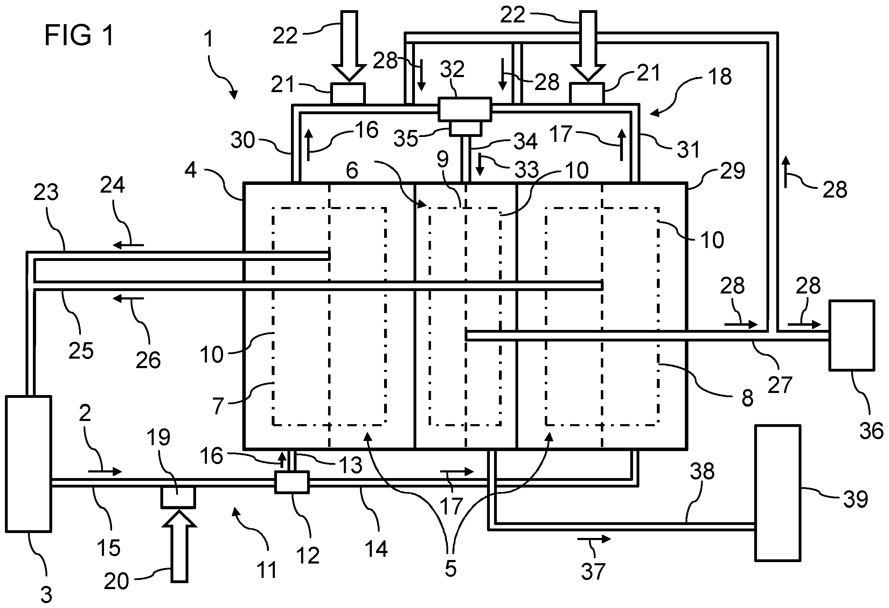

Die Erfindung wird nachstehend auch hinsichtlich weiterer Merkmale und Vorteile anhand der Beschreibung eines Ausführungsbeispiels und unter Bezugnahme auf die beiliegende, schematische Zeichnung näher erläutert. Es zeigt
- FIG 1: ein Ausführungsbeispiel einer erfindungsgemäßen Vorrichtung zur Behandlung von Abgasen eines Hauptprozesses.

FIG 1 zeigt in einer schematischen Darstellung eine erfindungsgemäße Vorrichtung 1 zur Behandlung von Abgas 2 eines Hauptprozesses 3. Bei dem Hauptprozess 3 kann es sich beispielsweise um einen Primärprozess in einer Sinteranlage, Pelletieranlage, Kokereianlage, Kraftwerksanlage oder vergleichbaren Anlage handeln.

Die Vorrichtung 1 umfasst eine Filtereinheit 4 zur Reinigung des Abgases 2 und eine Gaszuleitung 11 für die Zuführung des Abgases 2 vom Hauptprozess 3 zur Filtereinheit 4. Die Filtereinheit 4 ist als zweistufige Filtereinheit 4 mit einer ersten Filterstufe 5 und einer zweiten Filterstufe 6 ausgebildet. Die erste Filterstufe 5 ist zweigeteilt ausgebildet und umfasst einen ersten Filter 7 und einen zweiten Filter 8, die räumlich getrennt und beabstandet zueinander in der Filtereinheit 4 angeordnet sind. Die zweite Filterstufe 6 umfasst einen dritten Filter 9, der in der Filtereinheit 4 zwischen dem ersten Filter 7 und dem zweiten Filter 8 angeordnet ist.

Die Filtereinheit 4 weist ein gemeinsames Gehäuse 29 für den ersten Filter 7, den zweiten Filter 8 und den dritten Filter 9 auf. Das Gehäuse 29 weist eine quaderartige Form auf (in FIG 1 nicht vollständig dargestellt), das heißt das Gehäuse hat eine größere Länge als Breite und Höhe. Die drei Filter 7, 8, 9 sind im Gehäuse 29 in dessen Längsrichtung hintereinander angeordnet, wobei der dritte Filter 9 zwischen dem ersten Filter 7 und dem zweiten Filter 8 angeordnet ist. Beispielsweise kann die Filtereinheit 4 eine Länge in der Größenordnung von 15 bis 20 Metern haben und eine Breite und Höhe in der Größenordnung von 7 bis 8 Metern.

Erster Filter 7, zweiter Filter 8 und dritter Filter 9 sind je ein Gewebefilter 10. Jeder Gewebefilter 10 kann ein oder mehrere Filterelemente umfassen (nicht dargestellt). Bei den Gewebefiltern 10 kann es sich beispielsweise um Pulse-Jet-Filter handeln.

Die Gaszuleitung 11 weist eine Einrichtung 12 zum Aufteilen des anströmenden Abgases 2 auf eine erste Gaszuleitung 13 und eine zweite Gaszuleitung 14 auf. Die erste Gaszuleitung 13 ist zur Zuführung eines ersten Teilgasstroms 16 des Abgases 2 an den ersten Filter 7 und die zweite Gaszuleitung 14 zur Zuführung eines zweiten Teilgasstroms 17 des Abgases 2 an den zweiten Filter 8 ausgebildet. Die Gaszuleitung 11 weist in einer dritten Gaszuleitung 15 zwischen dem Hauptprozess 3 und der Einrichtung 12 zum Aufteilen des anströmenden Abgases 2 eine Primäradditiv-Zuführeinrichtung 19 für die Zuführung mindestens eines Primäradditivs 20 zum Abgas 2 auf. Die Zuführung des Primäradditivs 20 kann beispielsweise mittels Eindüsen erfolgen.

Die Vorrichtung 1 zur Behandlung von Abgasen 2 weist ferner ein Gasweiterleitungssystem 18 zur Weiterleitung des ersten Teilgasstromes 16 nach dem Durchströmen des ersten Filters 7 und des zweiten Teilgasstromes 17 nach dem Durchströmen des zweiten Filters 8 zum dritten Filter 9 auf. Hierzu weist das Gasweiterleitungssystem 18 eine erste Gasweiterleitung 30 zur Weiterleitung des ersten Teilgasstromes 16 nach dem Durchströmen des ersten Filters 7 und eine zweite Gasweiterleitung 31 zur Weiterleitung des zweiten Teilgasstromes 17 nach dem Durchströmen des zweiten Filters 8 und eine Einrichtung 32 zur Zusammenführung des ersten Teilgasstromes 16 und des zweiten Teilgasstromes 17 zu einem Gesamtgasstrom 33 und eine dritte Gasweiterleitung 34 zur Weiterleitung des Gesamtgasstroms 33 zum dritten Filter 9 auf.

Die dargestellte Vorrichtung 1 zur Behandlung von Abgas 2 weist zwei Hauptadditiv-Zuführeinrichtungen 21 für die Zuführung mindestens eines Hauptadditivs 22 zum Abgas 2 auf, wobei eine dieser Hauptadditiv-Zuführeinrichtungen 21 an der ersten Gasweiterleitung 30 und eine weitere dieser Hauptadditiv-Zuführeinrichtungen 21 an der zweiten Gasweiterleitung 31 angeordnet ist. Die Zuführung des Hauptadditives 22 kann beispielsweise mittels Eindüsen erfolgen.

In dem Gasweiterleitungssystem 18 ist zwischen erstem Filter 7 und zweitem Filter 8 einerseits und drittem Filter 9 andererseits, im gezeigten Beispiel aus Sicht des Abgasstroms der Einrichtung 32 zur Zusammenführung des ersten Teilgasstromes 16 und des zweiten Teilgasstromes 17 nachgeschaltet, ein Gaskonditionierer 35 angeordnet. Hierbei kann es sich um einen Gaskonditionierreaktor handeln, der beispielsweise einen Reaktionsraum für zugeführte Additive bereitstellt.

Die Vorrichtung 1 zur Behandlung von Abgas 2 weist eine erste Austragungseinrichtung 23 zum Austragen eines vom ersten Filter 7 abgeschiedenen ersten Filterprodukts 24 und eine zweite Austragungseinrichtung 25 zum Austragen eines vom zweiten Filter 8 abgeschiedenen zweiten Filterprodukts 26 auf. Die erste Austragungseinrichtung 23 und die zweite Austragungseinrichtung 25 sind dazu ausgebildet, das erste Filterprodukt 24 und das zweite Filterprodukt 26 dem Hauptprozess 3 zuzuführen.

Ferner ist eine dritte Austragungseinrichtung 27 zum Austragen eines vom dritten Filter 9 abgeschiedenen dritten Filterprodukts 28 aus der Filtereinheit 4 vorgesehen. Die dritte Austragungseinrichtung 27 ist dazu ausgebildet, das dritte Filterprodukt 28 teilweise einer weiteren Behandlungseinrichtung 36, beispielsweise einem sogenannten Leaching, und teilweise dem Gasweiterleitungssystem 18 zuzuführen. Es ist auch möglich, dass das dritte Filterprodukt 28 ohne weitere Aufbereitungsschritte direkt einer Verwertung, beispielsweise einer Zementproduktion, zugeführt wird (nicht dargestellt).

Bei dem Primäradditiv 20 kann es sich beispielsweise um ein Adsorptionsmittel und bei dem Hauptadditiv 22 ein Absorptionsmittel handeln. Das Primäradditiv 20 kann einen Inertstoff, beispielsweise CaCO3, zur Kontrolle des Kohlenstoffgehalts im ersten Filterprodukt 24 und im zweiten Filterprodukt 26 umfassen.

Aus Sicht des strömenden Abgases tritt das gereinigte Abgas 37 nach Durchströmen der zweiten Filterstufe 6 mit dem dritten Filter 9 aus der Filtereinheit 4 aus. Hierzu ist dem dritten Filter 9 eine Reingasleitung 38 zugeordnet (in FIG 1 nur schematisch gezeigt), angeordnet beispielsweise oberhalb des dritten Filters 9 (diese Anordnung ist in FIG 1 nicht gezeigt), die das gereinigte Abgas 37 nach Durchströmen der ersten Filterstufe 5 mit dem ersten Filter 7 und dem zweiten Filter 8 und der zweiten Filterstufe 6 mit dem dritten Filter 9 aufnimmt und einer Gasnachbehandlungs- und/oder Ausblaseinrichtung 39, beispielsweise einer Rauchgasentstickungsanlage und/oder einem Gebläse und/oder einem Kamin, zuführt.

### Bezugszeichenliste

- 1: Vorrichtung zur Behandlung von Abgasen
- 2: Abgas
- 3: Hauptprozess
- 4: Filtereinheit
- 5: erste Filterstufe
- 6: zweite Filterstufe
- 7: erster Filter
- 8: zweiter Filter
- 9: dritter Filter
- 10: Gewebefilter
- 11: Gaszuleitung
- 12: Einrichtung zum Aufteilen des anströmenden Abgases
- 13: erste Gaszuleitung
- 14: zweite Gaszuleitung
- 15: dritte Gaszuleitung
- 16: erster Teilgasstrom
- 17: zweiter Teilgasstrom
- 18: Gasweiterleitungssystem
- 19: Primäradditiv-Zuführeinrichtung
- 20: Primäradditiv
- 21: Hauptadditiv-Zuführeinrichtung
- 22: Hauptadditiv
- 23: erste Austragungseinrichtung
- 24: erstes Filterprodukt
- 25: zweite Austragungseinrichtung
- 26: zweites Filterprodukt
- 27: dritte Austragungseinrichtung
- 28: drittes Filterprodukt
- 29: Gehäuse
- 30: erste Gasweiterleitung
- 31: zweite Gasweiterleitung
- 32: Einrichtung zur Zusammenführung des ersten und zweiten Teilgasstromes
- 33: Gesamtgasstrom
- 34: dritte Gasweiterleitung
- 35: Gaskonditionierer
- 36: weitere Behandlungseinrichtung für das dritte Filterprodukt
- 37: gereinigtes Abgas
- 38: Reingasleitung
- 39: Gasnachbehandlungs- und/oder Ausblaseinrichtung

## Patentansprüche

1. Vorrichtung (1) zur Behandlung von Abgas (2) eines Hauptprozesses (3) umfassend eine Filtereinheit (4) zur Reinigung des Abgases (2) und
eine Gaszuleitung (11) für die Zuführung des Abgases (2) vom Hauptprozess (3) zur Filtereinheit (4),
**dadurch gekennzeichnet, dass**
die Filtereinheit (4) eine erste Filterstufe (5) und eine zweite Filterstufe (6) umfasst,
wobei die erste Filterstufe (5) einen ersten Filter (7) und einen zweiten Filter (8) umfasst,
wobei die zweite Filterstufe (6) einen dritten Filter (9) umfasst,
wobei der erste Filter (7) und der zweite Filter (8) und der dritte Filter (9) je ein Gewebefilter (10) sind,
wobei der dritte Filter (9) in der Filtereinheit (4) zwischen dem ersten Filter (7) und dem zweiten Filter (8) angeordnet ist,
wobei die Gaszuleitung (11) eine Einrichtung (12) zum Aufteilen des anströmenden Abgases (2) auf eine erste Gaszuleitung (13) und eine zweite Gaszuleitung (14) aufweist, wobei die erste Gaszuleitung (13) zur Zuführung eines ersten Teilgasstroms (16) des Abgases (2) an den ersten Filter (7) und die zweite Gaszuleitung (14) zur Zuführung eines zweiten Teilgasstroms (17) des Abgases (2) an den zweiten Filter (8) ausgebildet ist,
wobei die Vorrichtung (1) zur Behandlung von Abgas (2) ein Gasweiterleitungssystem (18) zur Weiterleitung des ersten Teilgasstromes (16) nach dem Durchströmen des ersten Filters (7) und des zweiten Teilgasstromes (17) nach dem Durchströmen des zweiten Filters (8) zum dritten Filter (9) aufweist, wobei das Gasweiterleitungssystem (18) mindestens eine Hauptadditiv-Zuführeinrichtung (21) für die Zuführung mindestens eines Hauptadditivs (22) zum Abgas (2) aufweist,
wobei die Vorrichtung (1) zur Behandlung von Abgas (2) eine erste Austragungseinrichtung (23) zum Austragen eines vom ersten Filter (7) abgeschiedenen ersten Filterprodukts (24) und eine zweite Austragungseinrichtung (25) zum Austragen eines vom zweiten Filter (8) abgeschiedenen zweiten Filterprodukts (26) und eine dritte Austragungseinrichtung (27) zum Austragen eines vom dritten Filter (9) abgeschiedenen dritten Filterprodukts (28) aus der Filtereinheit (4) aufweist.

2. Vorrichtung (1) nach Anspruch 1, wobei die Gaszuleitung (11) mindestens eine Primäradditiv-Zuführeinrichtung (19) für die Zuführung mindestens eines Primäradditivs (20) zum Abgas (2) aufweist.

3. Vorrichtung (1) nach Anspruch 1 oder 2, wobei die Filtereinheit (4) ein gemeinsames Gehäuse (29) für den ersten Filter (7) und den zweiten Filter (8) und den dritten Filter (9) aufweist, wobei das Gehäuse (29) eine quaderartige Form aufweist mit einer Länge, einer Breite und einer Höhe, wobei die Länge größer als die Breite und die Höhe ist, wobei der dritte Filter (9) im Gehäuse (29) in Längsrichtung zwischen dem ersten Filter (7) und dem zweiten Filter (8) angeordnet ist.

4. Vorrichtung (1) nach einem der Ansprüche 1 bis 3, wobei das Gasweiterleitungssystem (18) eine erste Gasweiterleitung (30) zur Weiterleitung des ersten Teilgasstromes (16) nach dem Durchströmen des ersten Filters (7) und eine zweite Gasweiterleitung (31) zur Weiterleitung des zweiten Teilgasstromes (17) nach dem Durchströmen des zweiten Filters (8) und eine Einrichtung (32) zur Zusammenführung des ersten Teilgasstromes (16) und des zweiten Teilgasstromes (17) zu einem Gesamtgasstrom (33) und eine dritte Gasweiterleitung (34) zur Weiterleitung des Gesamtgasstroms (33) zum dritten Filter (9) aufweist.

5. Vorrichtung (1) nach Anspruch 4, wobei mindestens zwei Hauptadditiv-Zuführeinrichtungen (21) für die Zuführung mindestens eines Hauptadditivs (22) zum Abgas (2) vorgesehen sind, wobei eine dieser Hauptadditiv-Zuführeinrichtungen (21) an der ersten Gasweiterleitung (30) und eine weitere dieser Hauptadditiv-Zuführeinrichtungen (21) an der zweiten Gasweiterleitung (31) angeordnet ist.

6. Vorrichtung (1) nach Anspruch 4 oder 5, wobei eine der mindestens einen Hauptadditiv-Zuführeinrichtungen (21) für die Zuführung mindestens eines Hauptadditivs (22) zum Abgas (2) an der dritten Gasweiterleitung (34) angeordnet ist.

7. Vorrichtung (1) nach einem der Ansprüche 1 bis 6, wobei in dem Gasweiterleitungssystem (18) zwischen erstem Filter (7) und zweitem Filter (8) einerseits und drittem Filter (9) andererseits ein Gaskonditionierer (35) angeordnet ist.

8. Vorrichtung (1) nach einem der Ansprüche 1 bis 7, wobei die erste Austragungseinrichtung (23) und die zweite Austragungseinrichtung (25) dazu ausgebildet sind, das erste Filterprodukt (24) und das zweite Filterprodukt (26) dem Hauptprozess (3) zuzuführen.

9. Vorrichtung (1) nach einem der Ansprüche 1 bis 8, wobei die dritte Austragungseinrichtung (27) dazu ausgebildet ist, das dritte Filterprodukt (28) zumindest teilweise einer weiteren Behandlungseinrichtung (36) und/oder zumindest teilweise dem Hauptprozess (3) und/oder zumindest teilweise der Gaszuleitung (11) und/oder zumindest teilweise dem Gasweiterleitungssystem (18) und/oder zumindest teilweise einem weiteren Verwertungsprozess zuzuführen.

10. Verfahren zur Behandlung von Abgas (2) eines Hauptprozesses (3) mit einer Vorrichtung (1) nach einem der Ansprüche 1 bis 9, bei dem
a) das Abgas (2) des Hauptprozesses (3) der Filtereinheit (4) mittels der Gaszuleitung (11) zugeführt wird, wobei das Abgas (2) in der Einrichtung (12) zum Aufteilen des anströmenden Abgases (2) aufgeteilt wird und ein erster Teilgasstrom (16) des Abgases (2) mittels der ersten Gaszuleitung (13) an den ersten Filter (7) und ein zweiter Teilgasstrom (17) des Abgases (2) mittels der zweiten Gaszuleitung (14) an den zweiten Filter (8) zugeführt wird,
b) der erste Teilgasstrom (16) nach Durchströmen des ersten Filters (7) und der zweite Teilgasstrom (17) nach Durchströmen des zweiten Filters (8) mittels des Gasweiterleitungssystems (18) zum dritten Filter (3) weitergeleitet werden und hierbei dem Abgas (2) mittels der mindestens einen Hauptadditiv-Zuführeinrichtung (21) mindestens ein Hauptadditiv (22) zugeführt wird, und
c) ein vom ersten Filter (7) abgeschiedenes erstes Filterprodukt (24) mittels der ersten Austragungseinrichtung (23) und/oder ein vom zweiten Filter (8) abgeschiedenes zweites Filterprodukt (26) mittels der zweiten Austragungseinrichtung (25) und/oder ein vom dritten Filter (9) abgeschiedenes drittes Filterprodukt (28) mittels der dritten Austragungseinrichtung (27) aus der Filtereinheit (4) ausgetragen wird.

11. Verfahren nach Anspruch 10, bei dem in Schritt a) dem Abgas (2) mittels einer mindestens einen Primäradditiv-Zuführeinrichtung (19) mindestens ein Primäradditiv (20) zugeführt wird.

12. Verfahren nach Anspruch 10 oder 11, bei dem in Schritt b) der erste Teilgasstrom (16) nach dem Durchströmen des ersten Filters (7) zunächst über eine erste Gasweiterleitung (30) und der zweite Teilgasstrom (17) nach dem Durchströmen des zweiten Filters (8) zunächst über eine zweite Gasweiterleitung (31) einer Einrichtung (32) zur Zusammenführung des ersten Teilgasstromes (16) und des zweiten Teilgasstromes (17) zu einem Gesamtgasstrom (33) zugeführt wird und anschließend der Gesamtgasstrom (33) über eine dritte Gasweiterleitung (34) dem dritten Filter (9) zugeführt wird.

13. Verfahren nach einem der Ansprüche 10 bis 12, bei dem das Abgas (2) zwischen erstem Filter (7) und zweitem Filter (8) einerseits und drittem Filter (9) andererseits konditioniert wird.

14. Verfahren nach einem der Ansprüche 10 bis 13, bei dem das erste Filterprodukt (24) und das zweite Filterprodukt (26) dem Hauptprozess (3) und/oder einem anderen Hauptprozess und/oder einem weiteren Verwertungsprozess zugeführt werden.

15. Verfahren nach einem der Ansprüche 10 bis 14, bei dem das dritte Filterprodukt (28) zumindest teilweise einer weiteren Behandlungseinrichtung (36) und/oder zumindest teilweise dem Hauptprozess (3) und/oder zumindest teilweise der Gaszuleitung (11) und/oder zumindest teilweise dem Gasweiterleitungssystem (18) und/oder zumindest teilweise einem weiteren Verwertungsprozess zugeführt wird.
